# EUROPEAN PATENT SPECIFICATION

(11) **EP 1 108 291 B1**
(45) Date of publication and mention of the grant of the patent: **28.09.2005**
(21) Application number: 00945823.3
(22) Date of filing: 26.06.2000
(51) Int. Cl.: H04B 1/707

(54) **SYNCHRONISATION CODEWORD FOR INTERFERENCE REDUCTION IN A CDMA SYSTEM**
SYNCHRONISIERUNGSKODEWORT ZUR INTERFERENZVERMINDERUNG IN EINEM CDMA-SYSTEM
MOT-CODE DE SYNCHRONISATION PERMETTANT DE REDUIRE LES PERTURBATION DANS UN SYSTEME EN MODE AMCR

(30) Priority: 29.06.1999 EP 99202096
(43) Date of publication of application: 20.06.2001
(73) Proprietor: Koninklijke Philips Electronics N.V., 5621 BA Eindhoven (NL)
(72) Inventor: VAN HOUTUM, Wilhelmus, J., NL-5656 AA Eindhoven (NL); VAN DRIEL, Carel, J., L., NL-5656 AA Eindhoven (NL)
(74) Representative: Groenendaal, Antonius W. M.
(86) International application number: PCT/EP2000/005906
(87) International publication number: WO 2001/001593

(56) References cited:
- WO-A-97/31429
- US-A- 5 499 236
- BOTTOMLEY G E: "SIGNATURE SEQUENCE SELECTION IN A CDMA SYSTEM WITH ORTHOGONAL CODING" IEEE TRANSACTIONS ON VEHICULAR TECHNOLOGY,US,IEEE INC. NEW YORK, vol. 42, no. 1, 1 February 1993 (1993-02-01), pages 62-68, XP000363400 ISSN: 0018-9545

## Description

The invention relates to a CDMA communication system comprising at least one primary station and a plurality of secondary stations, the primary station and the secondary stations exchanging CDMA signals via a communication medium, the secondary stations each comprising a modulator for modulating a respective data signal with a respective code word in order to obtain a respective CDMA signal, the modulator being embodied so as to modulate the respective data signal with an initial code word until synchronisation with the primary station is obtained, the modulator being further embodied so as to modulate the respective data signal with a respective final code word after synchronisation with the primary station has been obtained.

The invention further relates to a secondary station for exchanging CDMA signals via a communication medium with at least one primary station and to a method of synchronising a secondary station with a primary station.

A CDMA communication system according to the preamble is known from United States Patent Number 5 499 236. Code Division Multiple Access (CDMA) is a multiplexing technique which permits a number of users to simultaneously access a transmission channel. For this purpose a data signal to be transmitted is modulated with a code word, i.e. a pseudorandom binary sequence, in order to spread the spectrum of the waveform. In a receiver the original data signal can be detected by correlating the received CDMA signal with the corresponding code word. This correlation despreads the spectrum. Other CDMA signals are not despread by the correlator because their code words do not match. CDMA can be used, for example, in mobile communication systems and in interactive cable television networks.

The system capacity, i.e. the total sum of the bit rates of the users, of a synchronised CDMA communication system is limited by the maximum number of different code words, whereas the system capacity of an asynchronous CDMA communication system is limited by the interference noise. Hence, the system capacity of a synchronised CDMA communication system is generally much higher than that of an asynchronous CDMA communication system.

In the known synchronised CDMA communication system all secondary stations which are not yet synchronised with the primary station and which want to transmit data to that primary station use the same initial code word to modulate their data signals with. Next, the resulting asynchronous CDMA signals are transmitted to the primary station. The primary station then determines for each secondary station the timing difference between the received CDMA signal and a reference clock and transmits this timing difference to each particular secondary station. Next, the secondary stations can synchronise with the primary station by time shifting the initial code word in accordance with the received timing differences. This process is repeated for each secondary station until synchronisation is obtained, after which a different final code word is used by each secondary station to modulate its data signal with.

In the known CDMA communication system the asynchronous use of the initial code word may cause interference with the CDMA signals received and transmitted by the already synchronised secondary stations.

An object of the invention is to provide a CDMA communication system, wherein the asynchronous use of the initial code word does not cause interference with the CDMA signals received and transmitted by the already synchronised secondary stations. This object is achieved in the CDMA communication system according to the invention, which is characterized in that the initial code word is substantially orthogonal to the final code words for every possible time shift of the initial code word. The invention is based upon the recognition that such an initial code word does not interfere with the CDMA signals received and transmitted by the already synchronised secondary stations and is therefore very well suited for the purpose of synchronising a secondary station with the primary station.

A first embodiment of the CDMA communication system according to the invention is characterized in that all symbol values of the initial code word are equal to each other. If all symbol values of an initial code word are equal to each other, that initial code word remains the same for every possible time shift of that initial code word. Hence, a time shift of that initial code word does not influence the orthogonality of that initial code word relative to the final code words.

A second embodiment of the CDMA communication system according to the invention is characterized in that the code words are Walsh-Hadamard codes and that the initial code word corresponds to the first row or the first column of the Walsh-Hadamard matrix. Walsh-Hadamard code words have ideal cross correlation properties because all the Walsh-Hadamard code words are mutually orthogonal. The system capacity of a synchronised CDMA communication system can be further increased by using Walsh-Hadamard code words. If Walsh-Hadamard codes are used as code words the code corresponding to the first row or the first column of the Walsh-Hadamard matrix is an ideal initial code word as it is, for every possible time shift of that code, substantially orthogonal to all the final Walsh-Hadamard code words in use by the already synchronised secondary stations.

The above object and features of the present invention will be more apparent from the following description of the preferred embodiments with reference to the drawings, wherein:
Figure 1 shows a block diagram of an embodiment of a CDMA communication system according to the invention,
Figure 2 shows a block diagram of part of an embodiment of a secondary station,
Figure 3 shows a Walsh-Hadamard matrix *H*₄.

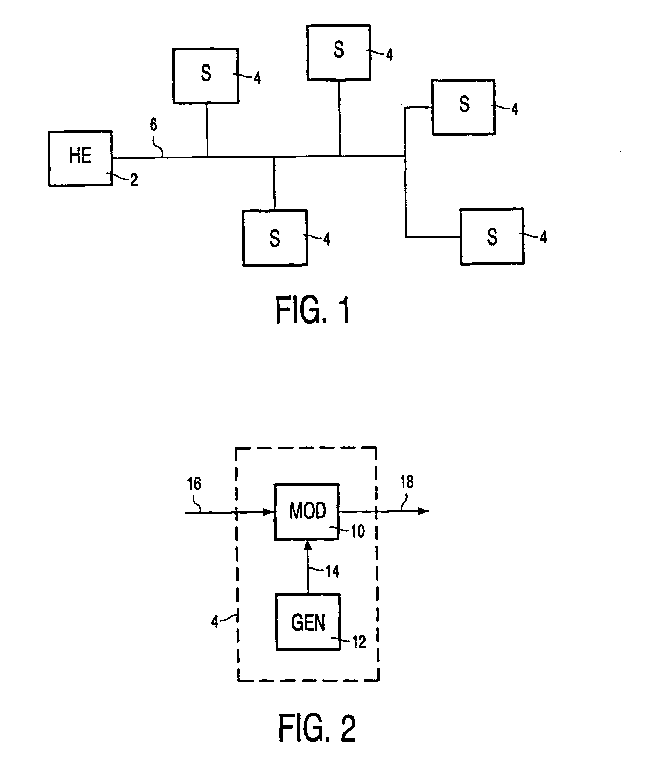

Figure 1 shows a block diagram of an embodiment of a CDMA communication system according to the invention. In such a CDMA communication system CDMA signals are exchanged via a communication medium 6 between a number of stations 2 and 4. These CDMA communication stations 2 and 4 comprise at least one primary station 2, which is here a head end, and a plurality of secondary stations 4. The CDMA communication system, which may comprise further primary stations 2 and secondary stations 4, is a partly synchronised CDMA communication system. This means that some of the secondary stations 4 are synchronised to the primary station 2, while other secondary stations 4 are not yet synchronised to the primary station 2.

Figure 2 shows a block diagram of a part of a secondary station 4. The part that is shown is that relating to the modulation of an input data signal 16. Operational parameters of all blocks shown are controlled by a controller (not shown). The secondary stations 4 each comprise a modulator 10 for modulating the input data signals 16 with code words 14 in order to obtain the CDMA signals 18. These code words 14 may be generated by a generator 12. A modulator 10 of a secondary station 4 which is not yet synchronised to the primary station 2 initially modulates its data signal 16 with an initial code word 14 until that secondary station 4 is synchronised with the primary station 2. From that moment on the data signal 16 is modulated with a final code word 14.

Ideally, an initial code word 14 is used which is, for every possible time shift of that code, substantially orthogonal to all the final code words 14 in use by the already synchronised secondary stations 4. Such an initial code word does not interfere with the CDMA signals 18 received and transmitted by the already synchronised secondary stations 4 and is therefore very well suited for the purpose of synchronising a secondary station 4 with the primary station 2. Code words 14 which have symbol values which are all equal to each other are such ideal initial code words. If all symbol values of an initial code word are equal to each other, that initial code word remains the same for every possible time shift of that initial code word. Hence, a time shift of that initial code word does not influence the orthogonality of that initial code word relative to the final code words. If Walsh-Hadamard codes are used as code words 14 the code word corresponding to the first row or the first column of the Walsh-Hadamard matrix is a practical example of an ideal initial code word having symbol values which are all equal to each other.

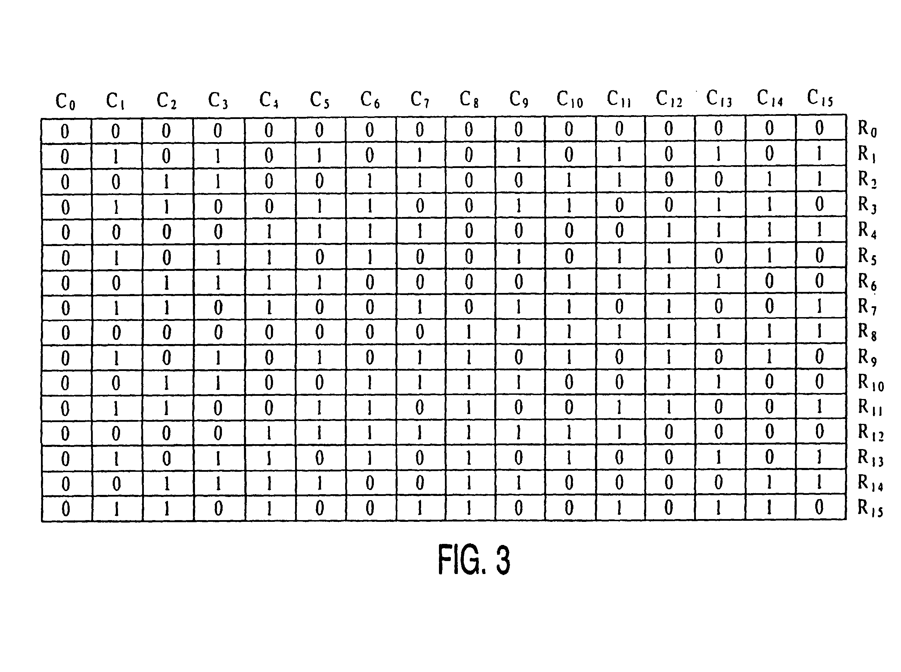

Figure 3 shows a Walsh-Hadamard matrix *H*₄. A Walsh-Hadamard matrix *H*_{*n*} is defined inductively and can be calculated from a given Walsh-Hadamard matrix *H*₁. The rows *R*₀..*R*_{2^{*n*}-1} and columns *C*₀..*C*_{2^{*n*}-1} of a Walsh-Hadamard matrix *H*_{*n*} are orthogonal. The code words 14 may be based on the rows *R*₀..*R*_{2^{*n*}-1} or the columns *C*₀..*C*_{2^{*n*}-1} of such a Walsh-Hadamard matrix *H*_{*n*}. A code word based upon the first row *R*₀ or the first column *C*₀ of the Walsh-Hadamard matrix *H*₄ (in general: of the Walsh-Hadamard matrix *H*_{*n*}) has symbol values which are all equal to each other.

The scope of the invention is not limited to the embodiments explicitly disclosed. The invention is embodied in each new characteristic and each combination of characteristics. Any reference signs do not limit the scope of the claims. The word "comprising" does not exclude the presence of other elements or steps than those listed in a claim. Use of the word "a" or "an" preceding an element does not exclude the presence of a plurality of such elements.

## Claims

1. A CDMA communication system comprising at least one primary station (2) and a plurality of secondary stations (4), the primary station (2) and the secondary stations (4) exchanging CDMA signals (18) via a communication medium (6), the secondary stations (4) each comprising a modulator (10) for modulating a respective data signal (16) with a respective code word (14) in order to obtain a respective CDMA signal (18), the modulator (10) being embodied so as to modulate the respective data signal (16) with an initial code word until synchronisation with the primary station (2) is obtained, the modulator (10) being further embodied so as to modulate the respective data signal (16) with a respective final code word after synchronisation with the primary station (2) has been obtained, **characterized in that** the initial code word is substantially orthogonal to the final code words for every possible time shift of the initial code word.

2. A CDMA communication system according to Claim 1, **characterized in that** all symbol values of the initial code word are equal to each other.

3. A CDMA communication system according to Claim 1 or 2, **characterized in that** the code words (14) are Walsh-Hadamard codes and that the initial code word corresponds to the first row or the first column of the Walsh-Hadamard matrix.

4. A secondary station (4) for exchanging CDMA signals (18) via a communication medium (6) with at least one primary station (2), the secondary station (4) comprising a modulator (10) for modulating a data signal (16) with a code word (14) in order to obtain a CDMA signal (18), the modulator (10) being embodied so as to modulate the data signal (16) with an initial code word until synchronisation with the primary station (2) is obtained, the modulator (10) being further embodied so as to modulate the data signal (16) with a final code word after synchronisation with the primary station (2) has been obtained, **characterized in that** the initial code word is substantially orthogonal to the final code word for every possible time shift of the initial code word.

5. A secondary station (4) according to Claim 4, **characterized in that** all symbol values of the initial code word are equal to each other.

6. A secondary station (4) according to Claim 4 or 5, **characterized in that** the code words (14) are Walsh-Hadamard codes and that the initial code word corresponds to the first row or the first column of the Walsh-Hadamard matrix.

7. A method of synchronising a secondary station (4) with a primary station (2), the primary station (2) and the secondary station (4) exchanging CDMA signals (18) via a communication medium (6), the method comprising the steps of:
- modulating a data signal (16) with an initial code word (14) in order to obtain an initial CDMA signal (18) and transmitting the initial CDMA signal (18) to the primary station (2) until synchronisation with the primary station (2) is obtained,
- modulating the data signal (16) with a final code word (14) in order to obtain a final CDMA signal (18) and transmitting the final CDMA signal (18) after synchronisation with the primary station (2) has been obtained,
**characterized in that** the initial code word is substantially orthogonal to the final code word for every possible time shift of the initial code word.

8. A method of synchronising a secondary station (4) with a primary station (2) according to Claim 7, **characterized in that** all symbol values of the initial code word are equal to each other.

9. A method of synchronising a secondary (4) station with a primary station (2) according to Claim 7 or 8, **characterized in that** the code words (14) are Walsh-Hadamard codes and that the initial code word corresponds to the first row or the first column of the Walsh-Hadamard matrix.

## Patentansprüche

1. Ein CDMA-Kommunikationssystem mit wenigstens einer Primärstation (2) und einer Anzahl Sekundärstationen(4), wobei die Primärstation (2) und die Sekundärstationen (4) über ein Kommunikationsmedium (6) CDMA-Signale (18) austauschen, wobei die Sekundärstationen (4) je einen Modulator (10) zum Modulieren eines betreffenden Datensignals (16) mit einem betreffenden Codewort (14) aufweisen, damit ein betreffendes CDMA-Signal (18) erhalten wird, wobei der Modulator (10) derart ausgebildet ist, dass er das betreffende Datensignal (16) mit einem Anfangscodewort moduliert, bis Synchronisation zu der Primärstation (2) erhalten wird, wobei der Modulator (10) weiterhin derart ausgebildet ist, dass er das betreffende Datensignal (16) mit einem betreffenden Endcodewort moduliert, nachdem Synchronisation zu der Primärstation (2) erhalten worden ist, **dadurch gekennzeichnet, dass** das Anfangscodewort im Wesentlichen orthogonal zu den Endcodewörtern steht, und zwar für jede mögliche Zeitverschiebung des Anfangscodewortes.

2. Ein CDMA-Kommunikationssystem nach Anspruch 1, **dadurch gekennzeichnet, dass** alle Symbolwerte des Anfangscodewortes einander gleich sind.

3. Ein CDMA-Kommunikationssystem nach Anspruch 1 oder 2, **dadurch gekennzeichnet, dass** die Codewörter (14) Walsh-Hadamard-Codes sind und dass das Anfangscodewort der ersten Reihe oder der ersten Spalte der Walsh-Hadamard-Matrix entspricht.

4. Sekundärstation (4) zum Austauschen von CDMA-Signalen (18) über ein Kommunikationsmedium (6) mit wenigstens einer Primärstation (2), wobei die Sekundärstation (4) einen Modulator (10) zum Modulieren eines Datensignals (16) mit einem Codewort (14) aufweist, damit ein CDMA-Signal (18) erhalten wird, wobei der Modulator (10) derart ausgebildet ist, dass er das Datensignal (16) mit einem Anfangscodewort moduliert, bis Synchronisation zu der Primärstation (2) erhalten wird, wobei der Modulator (10) weiterhin derart ausgebildet ist, dass das Datensignal (16) mit einem Endcodewort moduliert wird, und zwar nachdem Synchronisation zu der Primärstation (2) erhalten worden ist, **dadurch gekennzeichnet, dass** das Anfangscodewort für jede mögliche Zeitverschiebung des Anfangscodewortes im Wesentlichen orthogonal zu dem Endcodewort steht.

5. Sekundärstation (4) nach Anspruch 4, **dadurch gekennzeichnet, dass** alle Symbolwerte des Anfangscodewortes einander gleich sind.

6. Sekundärstation (4) nach Anspruch 4 oder 5, **dadurch gekennzeichnet, dass** die Codewörter (14) Walsh-Hadamard-Codes sind und dass das Anfangscodewort der ersten Reihe oder der ersten Spalte der Walsh-Hadamard-Matrix entspricht.

7. Verfahren zum Synchronisieren einer Sekundärstation (4) zu einer Primärstation (2), wobei die Primärstation (2) und die Sekundärstation (4) über ein Kommunikationsmedium (6) CDMA-Signale (18) austauschen, wobei das Verfahren die nachfolgenden Verfahrensschritte umfasst:
- das Modulieren eines Datensignals (16) mit einem Anfangscodewort (14) zum Erhalten eines Anfangs-CDMA-Signals (18) und das Übertragen des Anfangs-CDMA-Signals (18) zu der Primärstation (2) bis Synchronisation zu der Primärstation (2) erhalten worden ist,
- das Modulieren des Datensignals (16) mit einem Endcodewort (14) zum Erhalten eines End-CDMA-Signals (18) und das Übertragen des End-CDMA-Signals (18) nachdem Synchronisation zu der Primärstation (2) erhalten worden ist,
**dadurch gekennzeichnet, dass** das Anfangscodewort für jede mögliche Zeitverschiebung des Anfangscodewortes im Wesentlichen orthogonal zu dem Endcodewort steht.

8. Verfahren zum Synchronisieren einer Sekundärstation (4) zu einer Primärstation (2) nach Anspruch 7, **dadurch gekennzeichnet, dass** alle Symbolwerte des Anfangscodewortes einander gleich sind.

9. Verfahren zum Synchronisieren einer Sekundärstation (4) zu einer Primärstation (2) nach Anspruch 7 oder 8, **dadurch gekennzeichnet, dass** die Codewörter (14) Walsh-Hadamard-Codes sind und dass das Anfangscodewort der ersten Reihe oder der ersten Spalte der Walsh-Hadamard-Matrix entspricht.

## Revendications

1. Système de communication CDMA comprenant au moins une station primaire (2) et une pluralité de stations secondaires (4), la station primaire (2) et les stations secondaires (4) échangeant des signaux CDMA (18) par le biais d'un milieu de communication (6), les stations secondaires (4) comprenant chacune un modulateur (10) destiné à moduler un signal de données respectif (16) avec un mot de code respectif (14) afin d'obtenir un signal CDMA respectif (18), le modulateur (10) étant réalisé de manière à moduler le signal de données respectif (16) avec un mot de code initial jusqu'à ce que la synchronisation avec la station primaire (2) soit obtenue, le modulateur (10) étant en outre réalisé de manière à moduler le signal de données respectif (16) avec un mot de code final respectif après que la synchronisation avec la station primaire (2) ait été obtenue, **caractérisé en ce que** le mot de code initial est sensiblement orthogonal aux mots de code finaux pour n'importe quel décalage temporel du mot de code initial.

2. Système de communication CDMA selon la revendication 1, **caractérisé en ce que** toutes les valeurs des symboles du mot de code initial sont égales.

3. Système de communication CDMA selon la revendication 1 ou 2, **caractérisé en ce que** les mots de code (14) sont des codes de Walsh-Hadamard, et **en ce que** le mot de code initial correspond à la première rangée ou à la première colonne de la matrice de Walsh-Hadamard.

4. Station secondaire (4) destinée à échanger des signaux CDMA (18) par le biais d'un milieu de communication (6) avec au moins une station primaire (2), la station secondaire (4) comprenant un modulateur (10) destiné à moduler un signal de données (16) avec un mot de code (14) afin d'obtenir un signal CDMA (18), le modulateur (10) étant réalisé de manière à moduler le signal de données (16) avec un mot de code initial jusqu'à ce que la synchronisation avec la station primaire (2) soit obtenue, le modulateur (10) étant en outre réalisé de manière à moduler le signal de données (16) avec un mot de code final après que la synchronisation avec la station primaire (2) ait été obtenue, **caractérisée en ce que** le mot de code initial est sensiblement orthogonal au mot de code final pour n'importe quel décalage temporel du mot de code initial.

5. Station secondaire (4) selon la revendication 4, **caractérisée en ce que** toutes les valeurs des symboles du mot de code initial sont égales.

6. Station secondaire (4) selon la revendication 4 ou 5, **caractérisée en ce que** les mots de code (14) sont des codes de Walsh-Hadamard, et **en ce que** le mot de code initial correspond à la première rangée ou à la première colonne de la matrice de Walsh-Hadamard.

7. Procédé de synchronisation d'une station secondaire (4) avec une station primaire (2), la station primaire (2) et la station secondaire (4) échangeant des signaux CDMA (18) par le biais d'un milieu de communication (6), le procédé comprenant les étapes suivantes:
- la modulation d'un signal de données (16) avec un mot de code initial (14) afin d'obtenir un signal CDMA initial (18), et la transmission du signal CDMA initial (18) à la station primaire (2) jusqu'à ce que la synchronisation avec la station primaire (2) soit obtenue,
- la modulation du signal de données (16) avec un mot de code final (14) afin d'obtenir un signal CDMA final (18), et la transmission du signal CDMA final (18) après que la synchronisation avec la station primaire (2) ait été obtenue,
**caractérisé en ce que** le mot de code initial est sensiblement orthogonal au mot de code final pour n'importe quel décalage temporel du mot de code initial.

8. Procédé de synchronisation d'une station secondaire (4) avec une station primaire (2) selon la revendication 7, **caractérisé en ce que** toutes les valeurs des symboles du mot de code initial sont égales.

9. Procédé de synchronisation d'une station secondaire (4) avec une station primaire (2) selon la revendication 7 ou 8, **caractérisé en ce que** les mots de code (14) sont des codes de Walsh-Hadamard, et **en ce que** le mot de code initial correspond à la première rangée ou à la première colonne de la matrice de Walsh-Hadamard.
